Europäisches Patentamt

(19) European Patent Office

Office européen des brevets

(11) Publication number: **0 264 987**

**A1**

## (12) EUROPEAN PATENT APPLICATION

(21) Application number: 87201834.6

(22) Date of filing: 24.09.87

(51) Int. Cl.4: **A01B 33/06** , A01B 29/04 , A01B 49/02

(30) Priority: 26.09.86 NL 8602429

(43) Date of publication of application:
27.04.88 Bulletin 88/17

(84) Designated Contracting States:
DE FR GB NL

(71) Applicant: **C. van der Lely N.V.**
**Weverskade 10 P.O. Box 26**
**NL-3155 ZG Maasland(NL)**

(72) Inventor: **Van der Lely, Cornelis**
**7 Brüschenrain**
**Zug(CH)**

(74) Representative: **Mulder, Herman et al**
**Octrooibureau Van der Lely N.V. Weverskade**
**10 P.O. Box 26**
**NL-3155 ZG Maasland(NL)**

(54) **Soil cultivating machines.**

(57) The invention relates to soil cultivating machines comprising soil working members (3) which are power-driven about upwardly extending axes, and at least one supporting roller (42). The supporting roller (42) comprises solely three elongate elements (43) which extend at least substantially transversely to the direction of operative travel of the machine. The elongate elements (43) are mounted on spokes (44), which are constituted by strips which are contiguous to each other. The widest sides of the strips extend at least substantially parallel to the axis of rotation of the roller.

FIG. 1

## SOIL CULTIVATING MACHINES

The invention relates to soil cultivating machines comprising soil working members which are power-driven about upwardly extending axes, and at least one supporting roller.

A problem with prior art cultivating machines of this type is, in particular when heavy soils must be worked, that earth easily adheres to the supporting roller, as a result of which the function of the roller may be lost and even damage to the roller may occur.

The construction according to the invention effectively prevents soil from adhering in that the roller comprises three elongate elements which extend at least substantially transversely to the direction of operative travel of the machine.

Using this provision, it is possible to reduce the supporting periphery of the roller to such an extent that, without adversely affecting the supporting function, any earth penetrating into the roller can be removed effectively.

In accordance with a further feature of the invention, the elongate elements may be mounted on spokes, so that also the support for the elongate elements is arranged such that the risk of earth adhering to the roller is reduced as much as possible.

A still further feature of the invention concerns a soil cultivating machine of the above-defined type, in which the roller is provided such that it is movable during operation by means of a hinging quadrangle. As a result thereof the roller, if necessary, can deflect upwardly during operation relative to a frame portion carrying the soil working members, so as to prevent damage to the roller.

For a better understanding of the invention and to show how the same may be carried into effect, reference will now be made, by way of example, to the accompanying drawings, in which:

Figure 1 is a plan view of a soil cultivating machine according to the invention;

Figure 2 is a side view taken in the direction of the arrow II in Figure 1;

Figure 3 is, to an enlarged scale, a front view of an end of a frame portion carrying the soil working members;

Figure 4 is a view taken on the line IV-IV in Figure 3;

Figure 5 is a view taken on the line V - V in Figure 4, only part of this view being shown for the sake of clarity, and

Figure 6 is a view taken on the line VI - VI in Figure 3.

The implement shown in the drawings concerns a soil cultivating machine, in particular one for preparing a seed bed.

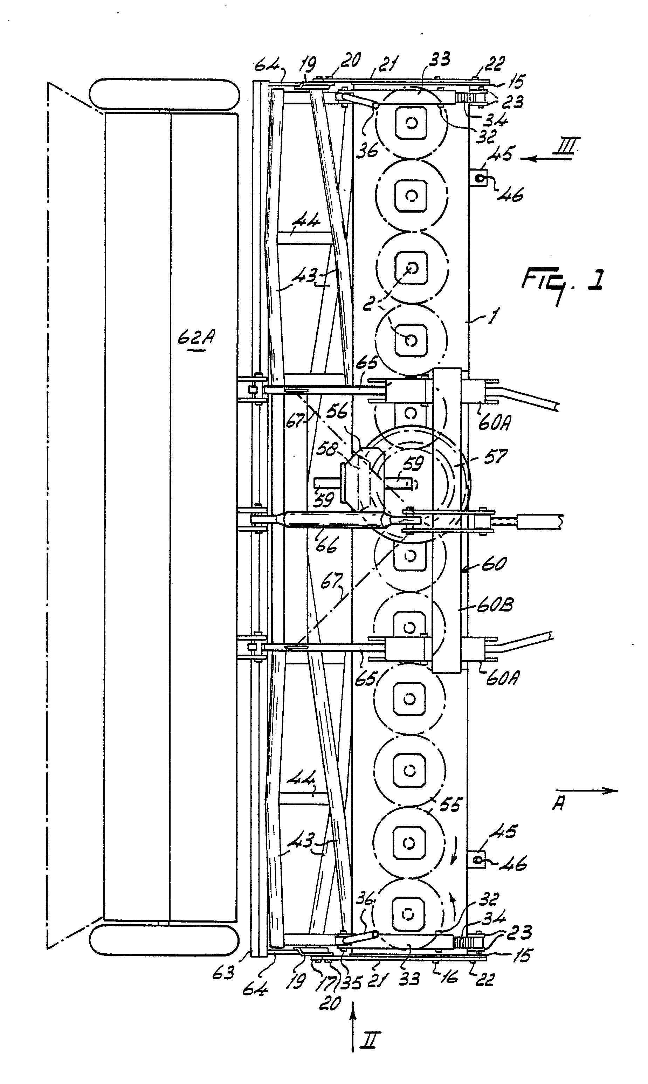

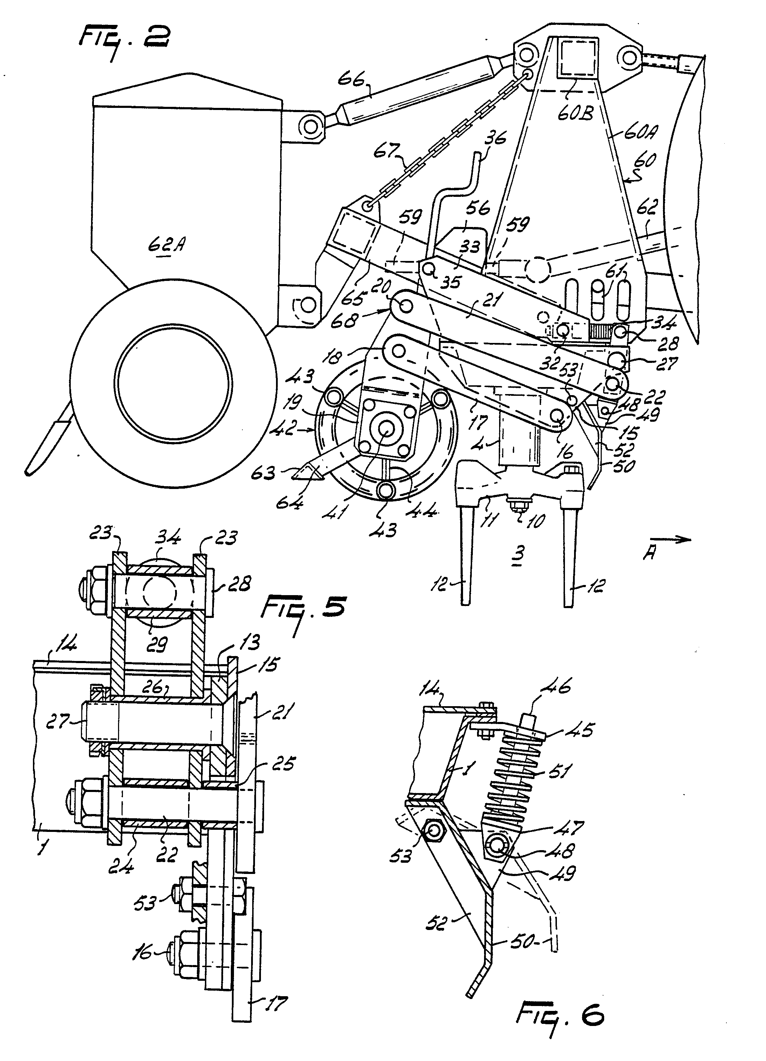

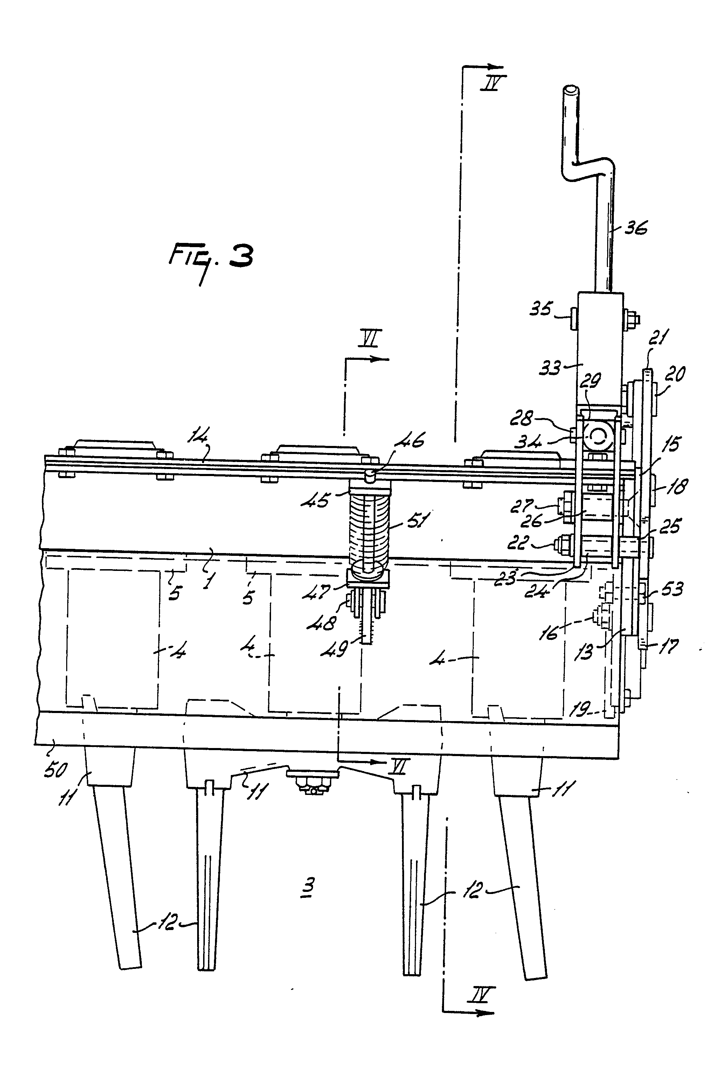

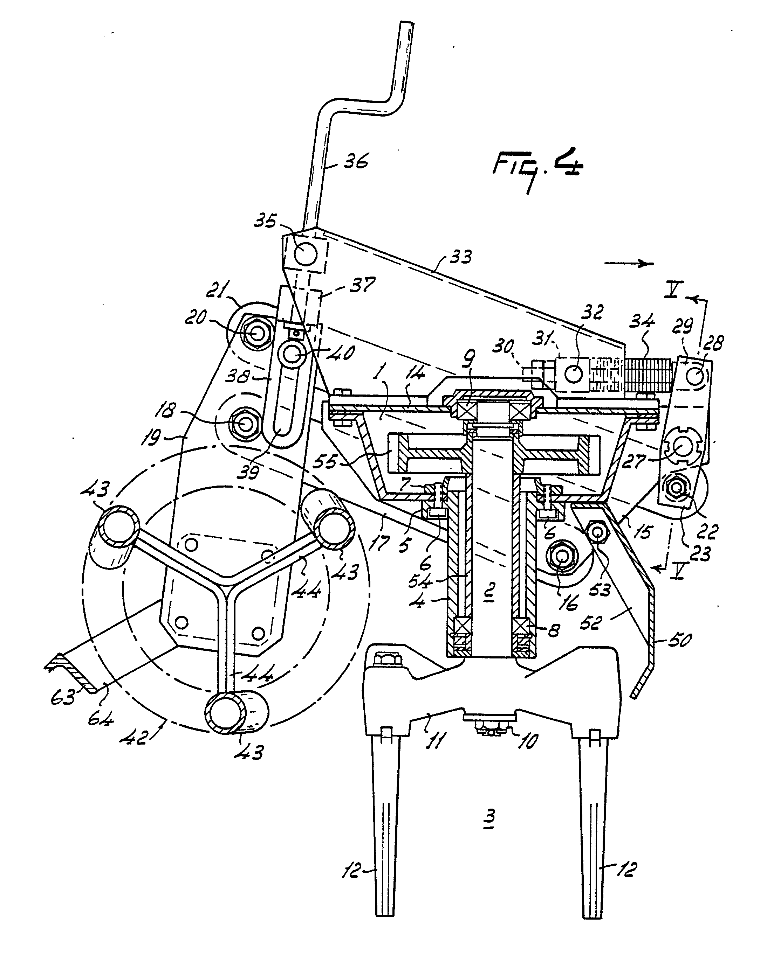

The machine comprises a box-like frame portion 1 which extends transversely to the direction of operative travel A and in which are supported, spaced apart equidistantly by preferably 25 cms, the upwardly, preferably vertically, extending shafts 2 of soil working members 3. Each of the shafts 2 reaches over a distance of preferably approximately 25 cms to below the lower side of the box-like frame portion 1 (Figure 4) and is accommodated in a tubular portion 4. At its upper side, each tubular portion 4 reaches by means of an edge to within a corresponding recess in the lower side of the box-like frame portion 1. At its upper side, each tubular portion 4 includes a flange 5 which is secured by means of bolts 6 and a flange 7 arranged at the inner side of the box-like frame portion 1. Near its lower side, each shaft 2 is supported in the tubular portion 4 by means of a bearing 8 and near the upper side of the box-like frame portion 1 by means of a bearing 9. At the end of each shaft 2 that extends to beyond the tubular portion 4 there is provided by means of a hub and a nut 10, which can co-operate with thread on the relevant end of the shaft 2, a carrier 11 which extends at least substantially horizontally and near its ends is provided with downwardly extending soil working elements 12 afforded by tines. Each end of the box-like frame portion 1 is closed by means of a plate 13 which preferably has a thickness of 10 mms. At its upper side, the plate 13 is contiguous via sealing material to a cover plate 14 at the upper side of the box-like frame portion 1 and at the bottom side extends to below the frame portion 1. A second plate 15, which is of a lesser thickness of preferably 5 mms, is arranged against the plate 13. The plate 15 is of a shape identical to that of the plate 13; however, the plate 15 reaches to above the cover plate 14 (Figures 2 and 4). Seen in a side view, the plates 13 and 15 are substantially of a triangular shape, the base of which triangle extends at least substantially horizontally and is present at the upper side, whilst the apex thereof is located between the midway point and the leading side of the lower side of the box-like frame portion 1 and at some distance therebelow. Near the lowest points of the plates 13 and 15, an arm 17 is arranged pivotally about a bolt 16. The arm 17 extends rearwardly along the outer side of the plate 15 and at a slight distance of preferably approximately 10 cms from the rear side of the box-like frame portion 1 said arm 17 is connected pivotally by means of a bolt 18 to a downwardly directed support 19. The pivotal point constituted by the bolt 18 is located above the centre of the support 19, which support extends at least substantially in a vertical direction: At the upper side, the support 19 is pivotally connected by means of a bolt 20 to the rear end of an arm 21, which extends at least substantially parallel to the arm 17 and at the leading side is pivotally connected by means of a bolt 22 to the lower end of an upwardly directed arm 23. The arm 23 comprises two strip-shaped portions which are located on either side of the arm 21 and are kept in position by means of spacer bushings 24 and 25 arranged about the bolt 22 (Figure 3). Near the midway point, a bushing 26 is provided between the strip-shaped portions of the arm 23. A bolt 27, which is locked by means of a ring and a nut, is passed through the bushing 26, the arrangement being such that the strip-shaped portions of the arm 23 are pivotal about the bolt 27. Near the upper side, a bolt 28 is passed through the strip-shaped portions of the arm 23, which bolt is enveloped between the strip-shaped portions by one end 29 of an at least substantially horizontal rod 30 (Figures 4 and 5). The other end of the rod 30 is passed through a block 31 which is arranged pivotally by means of a pin 32 between upwardly extending plates 33. The end of the rod 30 is provided with nuts adapted to cooperate with thread at the end of the rod and by means of which cup springs 34 disposed around the rod are pulled up against each other between the block 31 and the rear side of the end 29. The plates 33 extend in an upward direction and are each fitted by means of their bottom sides constituting the base of a triangle, whose apex is located above the rear side of the box-like frame portion 1, to the cover plate 14 at the upper side of said box-like frame portion 1. The plates 33 have their upper sides interconnected (Figures 3 and 4). A threaded spindle 36 is disposed pivotally by means of a pin 35 at the rear side between the plates 33 near the upper side. The lower end of the threaded spindle 36 is passed through a block 37 located between the plates 33 and the upper side of a strip 38 which is provided with a slot 39 located in the extension of the lower end of the threaded spindle 36. A pin 40 is movable in the slot 39, which pin is applied at the inner side of the arm 21. In that position of the arms 17 and 21 shown in the drawings, the pin 40 is located against the lower side of the threaded spindle 36. At the lower ends of the supports 19 there are provided freely pivotally by means of bearings and a shaft 41 the ends of a supporting roller 42, which preferably has a diameter of approximately 50 cms and whose leading side, as is shown in a plan view in Figures 2 and 4, is located below the rear side of the box-like frame portion 1. At its periphery, the roller 42 includes three tubular elongate elements 43 which are arranged at equal circumferential angles and extend helically relative to the axis of rotation of the roller, the arrangement being such that the angle between the ends of a tubular elongate element is at least 120° and preferably approximately 180°. The tubular elongate elements 43 are disposed at the ends of spokes 44 which relative to each other enclose an angle of approximately 120°. The spokes 44 are made of contiguous strips (Figure 4). The widest sides of the strips extend at least substantially parallel to the axis of rotation of the roller. The three contiguous strips constituting the spokes 44 are located near the ends of the roller 42 and therebetween are spaced apart by a mutually equal distance. In this embodiment, seven groups of three spokes 44, each being formed from the three strips, are provided for supporting the tubular elongate elements 43. At some distance from the ends, approximately at the level of the penultimate outermost soil working member 3, the front side of the box-like frame portion 1 is provided with a lug 45 (Figures 1 and 6) which from its connecting point extends slightly obliquely downwardly and forwardly. The lug 45 constitutes a support for a rod 46, the other end of which is pivotally connected by means of a bifurcate portion 47 and a pin 48 to an ear 49 located at the front side of a plate-shaped screen 50. A pressure spring 51 is arranged about the rod 46 between the lug 45 and the bifurcate portion 47. The screen 50 extends from the bottom side over some distance obliquely forwardly and upwardly and merges via a bend into a portion extending at least substantially in a vertical direction and whose length is approximately twice that of the first-mentioned portion. The portion that extends at least substantially in the vertical direction merges via a bend into a portion extending obliquely upwardly and rearwardly to the front side of the box-like frame portion 1, where said portion merges via a bend into a portion which is located at least substantially parallel to the bottom side of the box-like frame portion and is pushed thereagainst by the pressure of the spring 51. The screen 50 is provided at each end with plates 52 which extend at least substantially parallel to a vertical plane in the direction of operative travel A. The plates 52 are pivotally mounted by means of bolts 53 near the leading side of the plates 13 and 15 disposed at the ends of the box-like frame portion 1. Using a bushing 54, a spur gear 55 is fitted inside the box-like frame portion 1 to each of the shafts 2 of the soil working members 3, the arrangement being such that the gear wheels on the shafts 2 of adjacent soil working members 3 are in driving connection with each other. The shaft of a soil working member 3 located almost midway of the box-like frame portion 1 is extended upwardly over some distance and by means of this extension reaches into a gear box 56, inside which a bevel gear wheel 57 is provided on said extension. At the rear side, the bevel gear wheel 57 co-operates with a bevel gear wheel 58 which, as is apparent from the drawing, is located at least substantially above the rear side of the box-like frame portion 1 and is fitted on a shaft 59 which extends in the direction of operative travel A and projects from the gear box 56 at both the front and rear sides. The upper side of the box-like frame portion 1 is fitted with a trestle 60, which at the front side has a three-point connection for coupling to the three-point lifting hitch of a tractor, which three-point connection, seen in a plan view, is provided at least substantially above the leading side of the box-like frame portion. At its bottom side, the three-point connection comprises three spaced-apart, upwardly extending slots 61, which are located one behind the other and in each of which optinally one end of a lower lifting arm of the three-point lifting hitch of the tractor can be placed. The slots are made in upwardly directed portions 60A of the trestle, which portions are formed from interspaced plates. The upwardly directed portions of the trestle 60 are interconnected at their upper sides by means of a cross beam 60B. The uppermost coupling point of the three-point connection is approximately halfway the beam 60B.

The implement described in the foregoing operates as follows:

During operation, the machine described in the foregoing is coupled to the three-point lifting hitch of a tractor by means of the three-point connection which includes the slots 61 and, seen in plan view, is located substantially above the leading side of the box-like frame portion 1. As is shown in the drawings, the lowermost lifting arms of the three-point hitch of the tractor can be arranged such by means of a pin that they are movable in height in the centre slot 61. The end of the shaft 59 that projects at the front side from the gear box 56 is connected to the power take-off shaft of the tractor via an intermediate shaft 62, the soil working members 3 being induced to rotate via said intermediate shaft and the above-described transmission during travel of the machine in a direction indicated by the arrow A. Then two adjacent soil working members 3 rotate in opposite directions (Figure 1) and cultivate by means of their soil working elements 12 at least adjoining strips of soil. The working depth of the soil working members 3 can be set by means of the roller 42 which, as stated already in the foregoing, comprises solely three tubular elongate elements 43 which are disposed helically about the axis of rotation. By means of the arms 17 and 21 constituting part of a hinging quadrangle 68 and the respective threaded spindles 36, the roller 42 can be moved downwardly from its highest position as shown in the drawings, as a result of which the working depth of the soil working members 3 becomes less. The downward movement is effected in that the pin 40 provided at the upper arm 21 is pushed downwards by the end of the threaded spindle 36 in the slot 39. The lowest position of the roller 42 is reached when the pin 40 has arrived at the bottom of the slot 39. Then the roller 42 is in a position in which the soil working members 3 have a working depth which is e.g. suitable for the preparation of a seed bed for the beet root culture. According to the invention, the roller 42 is located so closely behind the box-like frame portion 1 that in every position of the roller the front side, seen in plan view, lies below the rear side of the box-like frame portion 1. In the highest position shown in the drawings, the front side of the roller 42 is located at least partly in the space between the lower side of the box-like frame portion 1 and the upper side of the soil working members 3, which space is obtained by extension of the shafts 2. Since there are used only three tubular elongate elements 43 which, as already stated, are provided helically through an angle of at least 120° and preferably approximately 180° about the axis of rotation of the roller, an adherance of earth can be prevented in an effective manner, particularly on heavy, wet soils. Earth caught between the tubular elongate elements 43 interspaced at a comparatively large distance can easily be removed. The fact that only relatively thin spokes 44 formed by strips are present for supporting the tubular elongate elements 43 also plays a part herein. In addition, a levelling member 63 may be provided behind the roller. The levelling member 63 is then attached by means of arms 64 which extend obliquely upwardly and forwardly and are fitted to the supports 19. The levelling member 63 is constituted by an angle iron which is arranged such that the legs form an inverted V. If durting operation the roller 42 hits a hard object or if hard objects are caught between the soil working members 3 and the roller 42, the roller can deflect about the pivotal point of the support 19 with the lower arm 17, whereby the upper arm 21 moves forwardly against the action of the cup springs 34 acting on the upper end of the arm 23 and constituting a spring-loaded mechanism. In this way damage is prevented and the roller can rapidly return to its initial position. The spring tension of the cup springs 34 is adjustable. The screen 50 provided at the front side is loaded such by the pressure spring 51 disposed arounnd the rod 46 that the upper side constituting a stop bears over its entire width against the bottom side of the box-like frame portion 1. By means of the screen 50, stones or similar hard objects are prevented from being caught in the space between the bottom side of the box-like frame portion and the upper side of the soil working members 3, in which situation they might damage this bottom side and/or the upper side of the soil working members. If in spite of this measure yet a hard object, such as a stone, is caught between the upper side of the soil working members 3 and the rear side of the screen 50, said screen can deflect forwardly against the action of the tension spring 51 about the pivotal point constituted by the bolt 53 and located below the front side of the box-like frame portion 1, so that the hard object can be removed and damage can be prevented. Since in the construction described in the foregoing the roller 42 is provided at such a short distance behind the box-like frame portion 1 that the front side, seen in plan view, is located below the rear side of the box-like frame portion 1 and the screen 50, seen in plan view, is wholly located below the front side of the box-like frame portion 1, while, in addition, the three-point connection is located, seen in plan view, substantially above the front side of the box-like frame portion, a very compact structure of the machine can be obtained. The machine can be arranged closely behind the tractor, partly because the front side of the shaft 59 to be coupled to the power take-off shaft of the tractor via the intermediate shaft 62 is positioned at least substantially at the level of a plane through the axes of rotation of the soil working members 3. The machine thus constructed is particularly suitable for use in combination with a seed drill 62A, as is shown schematically in Figures 1 and 2.

For this combination, the trestle 60 is provided at its bottom side near halfway the box-like frame portion 1 with pivotal arms 65 which extend rearwardly and are each provided at the level of the rear side of the roller 42 with a connecting point for a three-point connection. The upper side of the trestle 60 includes an arm 66 which, in plan view, is located halfway between the arms 65 and constitutes an uppermost coupling point of a three-point lifting hitch. The rear sides of the lower arms 65 are connected to the upper side of the trestle 60 by means of a chain 67 whose length is variable. Due to the compact structure of the machine wherein, seen in the direction of operative travel, the distance between the coupling points on the trestle 60 and the front side of the roller is less than that between the front and rear sides of the frame portion 1, i.e. less than 40 cms and preferably 25 cms, it is possible to transport the whole combination without the need for additional provisions for adjusting the seed drill to a transport position. In this situation, the chains prevent the lower arms for the three-point connection from coming to bear on the upper side of the box-like frame portion 1. Due to the compact structure of the machine, the lifting hitch of the tractor is not loaded in an unwanted manner during transportation of the combination.

**Claims**

1. A soil cultivating machine comprising soil working members (3) which are power-driven about upwardly extending axes, and at least one supporting roller (42), characterized in that the supporting roller (42) comprises solely three elongate elements (43) which extend at least substantially transversely to the direction of operative travel of the machine.

2. A soil cultivating machine as claimed in claim 1, characterized in that the elongate elements (43) are mounted on spokes (44).

3. A soil cultivating machine as claimed in claim 1 or 2, characterized in that an elongate element (43) is tube-shaped and extends helically about the axis of rotation of the roller (42) at an angle of at least 120°.

4. A soil cultivating machine as claimed in claim 2 or 3, characterized in that the spokes (44) are constituted by strips which are contiguous to each other, the widest side of said strips extending at least substantially parallel to the axis of rotation of the roller.

5. A soil cultivating machine as claimed in claim 4, characterized in that the spokes (44) are constituted by three strips which are contiguous to each other.

6. A soil cultivating machine as claimed in any one of the preceding claims, characterized in that during operation the supporting roller (42) is movable in height by means of a hinging quadrangle (68) which includes a spring-loaded mechanism (30, 34) that acts on the uppermost arm (21) of the hinging quadrangle (68) and is located above the said uppermost arm (21).

7. A soil cultivating machine as claimed in claim 6, characterized in that the uppermost arm (21) of the hinging quadrangle (68) is connected to the spring-loaded mechanism (30, 34) by means of an arm (23).

8. A soil cultivating machine as claimed in claim 6 or 7, characterized in that the spring-loaded mechanism (30, 34) includes a plurality of cup springs (34).

9. A soil cultivating machine as claimed in any one of the preceding claims, characterized in that a levelling member (63) is arranged behind the supporting roller (42).

10. A soil cultivating machine as claimed in any one of the preceding claims, characterized in that, taken in the direction of operative travel, the distance between the coupling points (61) for coupling of the machine to the tractor and the front side of the supporting roller (42) is less than that between the front and rear side of a frame portion (1) wherein the soil working members (3) are supported.

11. A soil cultivating machine as claimed in claim 10, characterized in that the coupling points (61) constitute part of a trestle (60) which, seen in plan view, is located above the front side of the frame portion (1) and can be coupled to the three point lifting hitch of a tractor. 12

FIG. 1

FIG. 2

FIG. 5

FIG. 6

FIG. 3

FIG.4

0 264 987

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | NL-A-8 003 243  (VAN DER LELY) <br> * Page 9, lines 10-20; figures 1,3-6 * | 1,3 | A 01 B 33/06 <br> A 01 B 29/04 <br> A 01 B 49/02 |
| A | DE-A-3 402 064  (KÖCKERLING) <br> * Page 8, line 14 - page 9, line 5; figures 1,3 * | 2 | |
| A | NL-A-7 613 261  (VAN DER LELY) <br> * Page 6, line 18 - page 7, line 11; figures 5,6 * | 4,5 | |
| A | FR-A-2 558 679  (VAN DER LELY) <br> * Page 7, lines 19-36; page 9, lines 11-20; figure 6 * | 6 | |
| A | NL-A-7 704 646  (VAN DER LELY) <br> * Page 2, line 25 - page 3, line 2; page 1, lines 13-20; figure 2 * | 9 | |
| A | GB-A-2 116 411  (VAN DER LELY) <br> * Figure 2 * | 10 | |
| A | DE-U-1 940 335  (SCHOPF) <br> * Abstract; figure * | 11 | TECHNICAL FIELDS SEARCHED (Int. Cl.4) <br><br> A 01 B |
| A | GB-A-2 089 182  (VAN DER LELY) <br> * Abstract; figures * | 11 | |
| A | CH-A- 42 330  (FELD) <br> * Whole document * | 1,6 | |
| A | NL-A-7 712 318  (PATENT CONCERN) <br> * Page 6, lines 6-9; figure 2 * | 9 | |

The present search report has been drawn up for all claims

| Place of search | Date of completion of the search | Examiner |
|---|---|---|
| THE HAGUE | 04-01-1987 | VON ARX V.U. |